(19) Europäisches Patentamt
European Patent Office
Office européen des brevets

(11) **EP 4 311 784 A1**

(12) **EUROPEAN PATENT APPLICATION**

(43) Date of publication:
**31.01.2024 Bulletin 2024/05**

(21) Application number: **23188245.7**

(22) Date of filing: **27.07.2023**

(51) International Patent Classification (IPC):
**B64F 5/60** $^{(2017.01)}$ **G06F 30/15** $^{(2020.01)}$
**G06Q 10/06** $^{(2023.01)}$

(52) Cooperative Patent Classification (CPC):
**G06Q 10/04; B64F 5/60; G06F 30/15;
G06Q 10/06313; G06Q 50/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.07.2022 GB 202211034**

(71) Applicant: **Airbus Operations Limited
Bristol BS34 7PA (GB)**

(72) Inventors:
• **HOWELL, George
Bristol BS34 7PA (GB)**
• **COOPER, Jonathan
Bristol BS34 7PA (GB)**

(74) Representative: **EIP
Fairfax House
15 Fulwood Place
London WC1V 6HU (GB)**

(54) **AIRCRAFT COMPONENT SELECTION**

(57) Computer-implemented methods and systems for selecting components to be used in an aircraft system are provided. A reliability evaluation function, to produce a reliability score, and a complexity evaluation function, to produce a complexity score, are provided. A multi-objective optimisation function is performed to determine at least one set of candidate components for the aircraft system that satisfy one or more conditions. The multi-objective optimisation function includes selecting a new set of candidate components, performing at least one of the reliability evaluation function and the complexity evaluation function, and evaluating at least one of the reliability score and the complexity score according to the conditions. The new set of candidate components are stored in associated with an indication of the outcome of the evaluation. An aircraft comprising a set of components that have been selected from one or more of the stored sets of components is also provided.

FIG. 1

**Description**

TECHNICAL FIELD

The present disclosure relates to aircraft systems and their design. In particular, but not exclusively, the present disclosure relates to component selection for aircraft systems.

BACKGROUND

Aircraft typically comprise systems which are designed and built according to the expertise of engineers. Engineers generally review and select components to be used in an aircraft system manually according to specifications and using their experience. Designing aircraft systems and selecting components for these aircraft systems from potential suppliers generally involves a considerable amount of time and planning.

SUMMARY

A first aspect of the present invention provides a computer-implemented method for selecting components to be used in an aircraft system, the method comprising: providing a reliability evaluation function configured to produce a reliability score for a given set of candidate components for the aircraft system; providing a complexity evaluation function configured to produce a complexity score representative of a complexity of installing a given set of candidate components for the aircraft system; and performing a multi-objective optimisation function to determine at least one set of candidate components for the aircraft system that satisfy one or more conditions relating to at least one of the reliability score and the complexity score, wherein the multi-objective optimisation function includes iteratively: selecting a new set of candidate components for the aircraft system; performing at least one of the reliability evaluation function to generate a reliability score for the set of candidate components and the complexity evaluation function to generate a complexity score for the set of candidate components; evaluating at least one of the reliability score and the complexity score according to the one or more conditions; and storing the new set of candidate components in association with an indication of an outcome of the evaluation according to the one or more conditions.

In this way, the design of an aircraft system, and in particular the selection of components for the aircraft system, can be evaluated during the design process to identify selections of candidate components which provide a desired performance. Providing the reliability evaluation function allows the method to evaluate candidate selections of components which at least satisfy standardised threshold reliability levels. The complexity evaluation function provides the method with a process for quantitatively evaluating and refining the components to reduce the complexity of installation and servicing of the aircraft system. By performing a multi-objective optimisation, it becomes possible to identify candidate selections of components which have performance characteristics which engineers may otherwise not be able to identify and a rate which far exceeds that of a human engineer.

Optionally, the reliability evaluation function comprises: obtaining a plurality of operational events; for each said operational event, determining whether the given set of candidate components comply with a respective reliability condition for the said operational event; and generating the reliability score for the given set of candidate components based on a number of operational events of the plurality of operational events for which the given set of candidate components does not comply with the respective reliability condition.

By evaluating the reliability of the selection of candidate components based on a variety of operational events and with mode specific reliability conditions, it becomes possible in increase the accuracy of the reliability evaluation performed for each set of candidate components.

Optionally, determining whether the given set of candidate components comply with the respective reliability condition for a said operational event comprises: determining a maximum likelihood threshold for the said operational event; determining a likelihood of the said operational event based on respective altered operational mode probability values associated with the given set of candidate components; and determining whether the likelihood of the said operational event exceeds the maximum likelihood threshold, wherein the given set of candidate components complies with the respective reliability condition for the said operational event if the likelihood of the operational event is less than the maximum likelihood threshold for the operational event.

Determining a maximum likelihood threshold for each said operational event, provides an efficient procedure for evaluating the performance of the set of candidate components in a given operational event. Determining a reliability score for the set of candidate components based on an analysis of a large number of operational modes, allows multi-objective optimisation functions to quickly analyse and identify sets of candidate components based on a single variable.

Optionally, determining whether the given set of candidate components comply with the respective reliability condition for a said operational event comprises: determining a marginal likelihood threshold for the said operational event, the marginal likelihood threshold representing a lower likelihood than the maximum likelihood threshold; and

determining whether the likelihood of the said operational event exceeds the marginal likelihood threshold, wherein the given set of components complies with the respective reliability condition for the said operational event if the likelihood of the operational event is less than the marginal likelihood threshold for the said operational event.

Using a marginal likelihood threshold in this way provides a procedure for a fine tuning the reliability evaluation process, and to increase the threshold of reliability set for the evaluation of each of the sets of candidate components. In some cases, the number of operational events for which the set of candidate components does not meet the condition associated with the marginal likelihood, may be weighted as compared to the number of times the set of candidate components does not meet the maximum likelihood threshold. This allows more granular evaluation of the reliability of each of the sets of candidate components, which thereby enables the identification of sets of candidate components which perform better in two or more of the objectives of the optimisation as compared to other methods.

Optionally, wherein the method comprises obtaining component library data representative of a plurality of candidate components for the aircraft system, wherein each candidate component is associated with a respective altered operational mode probability value in the component library data.

A component library including the characteristics such as the associated likelihood of altered operational modes allows the data for performing a multi-objective optimisation to be quickly and efficiently retrieved and processed. The component library data can be compiled from data sheets describing components obtained from manufacturers and suppliers.

Optionally, obtaining the plurality of operational events includes: determining a set of component types for the aircraft system, each component type being associated with two or more of the candidate components for the aircraft system; generating an initial set of operational events each representing an altered operational mode of at least one of the component types; determining a worst-case likelihood for each of the initial set of operational events based on the altered operational mode probability values associated with the candidate components for the aircraft system; and modifying the initial set of operational events by removing operational events for which the associated worst-case likelihood is below a maximum likelihood threshold; and outputting the modified set of operational events as the plurality of operational events.

Given the vast number of components used in modern aircraft, evaluating the reliability of a set of candidate components in the correspondingly large number of candidate component operational modes can become too burdensome to calculate by brute force, making it infeasible and in some cases, not possible. As such, filtering the total number of operational events in this way increases the efficiency of evaluating the reliability of each set of candidate components, and may in turn reduce the time taken, or the processing power required to perform the reliability evaluation.

Optionally, the method comprises obtaining operational event category data representing a plurality of altered operational modes for the aircraft system and associating each altered operational mode with a respective maximum likelihood threshold, and wherein determining the maximum likelihood threshold for the said operational event comprises: selecting an altered operational mode based on an evaluation of the operational event; and identifying the maximum likelihood threshold corresponding to the selected altered operational mode from the operational event category data.

Obtaining a pre-existing evaluation of the reliability of altered operational modes for the aircraft system and their associated maximum likelihood thresholds reduces the need to compute evaluation conditions on-the-fly thereby increasing the efficiency, and allowing more processing power to be allocated to other aspects of the method.

Optionally, the complexity evaluation function comprises, iteratively: obtaining a set of independence rules representing dependencies between components in the aircraft system; storing a complexity score representative of a number of independence rules having been removed from the set of independence rules; evaluating a performance of the aircraft system when the given set of components is installed according to the set of independence rules; if the performance of the aircraft system satisfies one or more performance criteria: removing at least one independence rule from the set of independence rules; and updating the complexity score; and if the performance of the aircraft system does not satisfy the one or more performance criteria, outputting the complexity score.

In this way, it becomes possible to provide a quantitative evaluation of the complexity of installing, and maintaining, an aircraft system. For example, it may be possible to identify where two potential avionic control routes do not need to be redundant from one another, or two physical equipment actuation sequences routes do not need to be redundant from one another. Similarly, it may be possible to identify that certain redundant equipment may be dependent on at least part of the primary equipment. Reducing the complexity of the aircraft system, by reducing the total number of independence rules, may also reduce the complexity of avionic control, the amount of wiring, and the number of redundant systems included in the aircraft system. This in turn enables the identification of sets of candidate components which are lighter, and less complex to install and maintain.

Optionally, the at least one set of candidate components for the aircraft system satisfy two or more conditions relating to at least the reliability score and the complexity score.

The multi-objective optimisation function enables the method to identify and select sets of candidate components based their performance according to a plurality of conditions. Reliability scores often exist as red line minimum reliabilities set by standards and so it becomes possible to ensure adherence to all reliability conditions while also identifying sets of candidate components that decrease the complexity of the aircraft system.

Optionally, the method comprises obtaining component library data representative of a plurality of candidate components for the aircraft system, wherein each candidate component is associated with respective component characteristics, the multi-objective optimisation function is performed to determine at least one set of candidate components that satisfy two or more conditions relating to: one or more target component characteristics; and at least one of the reliability score and the complexity score; and wherein the multi-objective optimisation further comprises: determining a component characteristic score based on the component characteristics associated with the selected set of candidate components; and evaluating the component characteristic score and at least one of the reliability score and the complexity score according to the two or more conditions.

Providing a component characteristic score in this manner, and using it during the multi-objective optimisation function enables a plurality of design characteristics to be considered when designing aircraft systems. This ultimately results in identifying sets of candidate components that can be less complex to install, cheaper to operate, save weight, and have lower upfront costs than alternatives.

Optionally, performing the multi-objective optimisation function includes generating a plurality of sets of candidate components the plurality of sets of candidate components representing a pareto frontier.

Generating a pareto frontier allows an engineer to inspect multiple sets of candidate components and evaluate their performance. A pareto frontier may enable the engineer to identify trade offs between different criteria when designing the aircraft system. For example, the pareto frontier may indicate that while the solutions may be found which improve the performance of the aircraft system according to one criteria this may lead to a greater than expected degradation in performance of the aircraft system according to other criteria.

Optionally, the multi-objective optimisation function includes a genetic algorithm.

Genetic algorithms provide efficient methods for developing solutions to both constrained and unconstrained optimisation problems. The use of such algorithms often out perform the ability of other algorithm types when employed to solve optimisation problems.

Optionally, the genetic algorithm is a non-dominated sorting genetic algorithm.

Optionally, the method further comprises selecting one or more of the stored sets of candidate components for the aircraft system based on the associated indication of the outcomes of the evaluations according to the one or more conditions.

Actively selecting one or more of the sets of candidate components based on their associated evaluations enables one or more optimal sets of components to be determined and used for the aircraft system.

A second aspect of the present invention provides an aircraft component selection system comprising: storage for storing component library data representing a plurality of candidate components for an aircraft system; a reliability evaluation module configured to determine a reliability score for a given set of candidate components for an aircraft system; a complexity evaluation module configured to produce a complexity score representative of a complexity of installing a given set of candidate components for the aircraft system; and a multi-objective optimisation module for determining at least one set of candidate components for the aircraft system that satisfy one or more conditions relating to at least one of the reliability score and the complexity score, wherein the multi-objective optimisation module is configured to: select a new set of candidate components for the aircraft system; control at least one of the reliability evaluation module to determine a reliability score for the set of candidate components and the complexity evaluation module to determine a complexity score for the set of candidate components; evaluating at least one of the reliability score and the complexity score according to the one or more conditions; and storing the new set of candidate components in association with an outcome of the evaluation according to the one or more conditions.

A third aspect of the present invention provides a non-transitory computer-readable storage medium comprising computer-executable instructions which, when executed by at least one processor, cause the at least one processor to perform a computer-implemented method according to the first aspect.

A fourth aspect of the present invention provides an aircraft comprising an aircraft system in which the components included in the aircraft have been selected from one or more stored sets of candidate components and associated indications of the outcome of the respective evaluations determined according to first aspect.

BRIEF DESCRIPTION OF THE DRAWINGS

Embodiments of the invention will now be described, by way of example only, with reference to the accompanying drawings, in which:

Figure 1 is a schematic diagram showing an aircraft component selection system according to examples.

Figure 2 is a flow chart showing a computer-implemented method according to examples.

Figure 3 is a schematic diagram showing the computer-implemented method according to examples.

Figure 4 is a graph showing stored sets of candidate components and their associated characteristics with respect to one or more conditions according to examples.

Figure 5 is schematic diagram showing a reliability evaluation function according to examples.

Figure 6 is a schematic diagram showing data representing a plurality of operational events and component library data according to examples.

Figure 7 is graph model showing a braking system for an aircraft

Figure 8A is schematic diagram showing a table storing an outcome of a reliability evaluation for the set of candidate components according to examples.

Figure 8B is a schematic diagram showing a table storing operational event category data according to examples.

Figure 9 is a schematic diagram showing a complexity evaluation function according to examples.

Figure 10 is schematic diagram showing a non-transitory computer-readable storage medium according to examples.

Figure 11 is schematic diagram showing a side view of an aircraft according to examples.

DETAILED DESCRIPTION

Aircraft systems are becoming increasingly complex as the functionality and reliability of these systems grows. This increasing complexity is driven by the inclusion of a larger number of components and related avionic control systems than older aircraft. As aircraft systems have grown in complexity, selecting components to be used in these aircraft from the vast number of available components developed and manufactured by suppliers has commensurately grown in complexity. Attempts have been made to digitize the design process by developing models of aircraft. However, engineers still generally rely on their expertise and trial and error when selecting components to install in their aircraft systems.

Expertise of engineers has generally been relied upon when designing aircraft systems due to the qualitative nature of the evaluation of certain design goals. While some criteria may be purely quantitative in nature, such as weight, upfront cost and so forth, other criteria such as complexity of the resulting aircraft system are harder to evaluate objectively.

Reliability is generally a principle concern to engineers when designing aircraft systems. An aircraft system as a whole should demonstrate a certain level of reliability, but this can be achieved in a number of ways using components having individually different reliabilities. Accordingly, different engineers can produce different aircraft system designs which all meet required reliability specifications but which differ in other characteristics. For example, an aircraft system that one engineer may consider an improved design for a given aircraft system due to the increased redundancy, and thereby reliability may, to another engineer, appear to be overly complex and thereby increase the maintenance burden for the aircraft system, and provide further opportunities for components to enter altered operational modes.

When selecting candidate components for an aircraft system, engineers may select components from manufacturers based on their experience, and according to criteria which they are attempting to satisfy in their design. However, reviewing, testing, or otherwise considering all available components for an aircraft system is infeasible to perform manually due to the total number of candidate components for each type of component in an aircraft system, and their potential combinations. Further, relying on a manual evaluation from engineers may result in certain combinations of candidate components not being considered. Potential combinations of candidate components which differ drastically to combinations used in older aircraft systems may be overlooked by engineers as they lay outside of the experience of said engineers.

Certain regulatory bodies may set criteria relating to the characteristics of aircraft systems in particular with respect to reliability. Regulatory bodies may set standards which define types of operational events and their associated maximum permissible likelihoods. Some operational events may be critical, and the standards may define a maximum allowable likelihood of such an event as occurring as being in the order of 1E-09. Other operational events may be less critical and the standards may define a higher maximum likelihood such as in the order of 1E-07.

Certain examples described herein relate to a computer-implemented method and system for selecting candidate components to be used in an aircraft system. The method implemented by the system includes using a multi-objective optimisation function which enables sets of candidate components and an evaluation of their respective performance to be determined, categorised, and stored. Genetic algorithms, or other machine learning evaluation algorithms, may be employed which allow the system to quickly and efficiently, identify sets of candidate components which satisfy certain conditions while disregarding sets of components which perform worse than other sets of components. For example, the method may include utilising a reliability evaluation function and/or a complexity evaluation function to guide the selection of candidate components in the optimisation function.

The multi-objective optimisation algorithm may be tuneable, allowing the identification of a plurality of sets of candidate components each of which represent an optimum performance compared to other sets of candidate components with respect to a specific set of weighted conditions.

Certain examples include a complexity evaluation function which provides a quantitative measure of the complexity of the aircraft system. Complexity in this context may refer to the ease with which components in the aircraft may be installed and maintained, the complexity of the avionic control systems, and redundancy requirements in the aircraft system. This in turn enables the system to balance the complexity of an aircraft system against the performance of the aircraft system in a repeatable and accountable manner while also considering a larger number of potential sets of candidate components than a human engineer.

Beneficially, according to examples, the reliability evaluation function and the complexity evaluation may make use of models of the aircraft system in order to perform a rigorous assessment of the selection of candidate components in a variety of operational scenarios, and while considering fallback procedures, to mitigate effects arising from the operational scenarios in which the aircraft system is expected to operate.

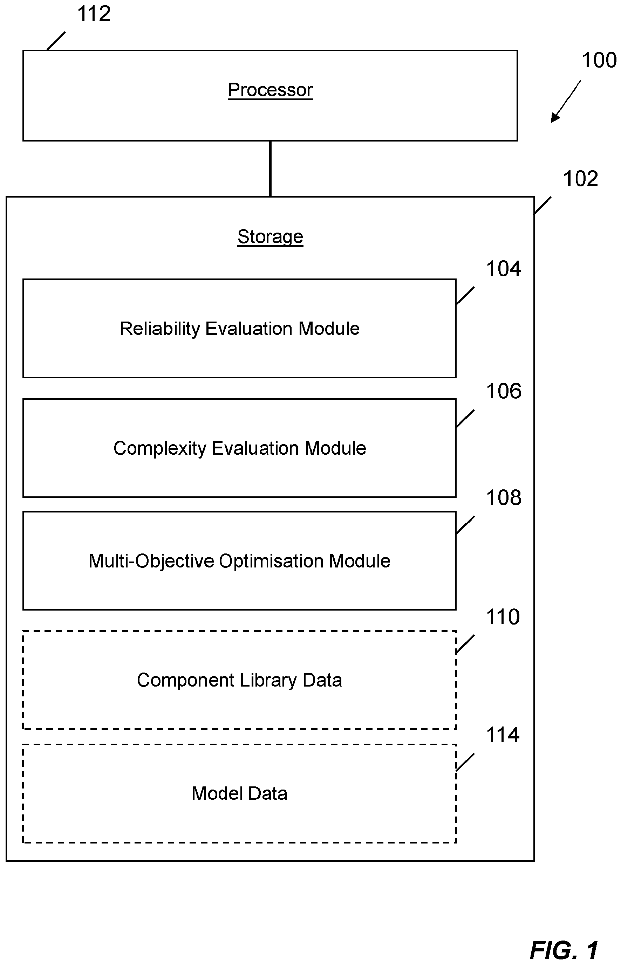

Figure 1 shows an aircraft component selection system 100 comprising storage 102 for storing component library data 110 representing a plurality of candidate components for an aircraft system. The aircraft selection system 100 also comprises a plurality of modules including a reliability evaluation module 104, a complexity evaluation module 106, and a multi-objective optimisation module 108. In the example shown in Figure 1, the modules 104 to 108 are implemented in the form of programs, or instruction sets, stored in the storage 102 and executable by at least one processor 112. The storage 102 includes any suitable combination of transitory and non-transitory storage for storing program code, including random-access memory (RAM), read-only memory (ROM), synchronous dynamic random-access memory (SDRAM), or any other suitable type of memory.

In the example shown in Figure 1, the aircraft component selection system 100 includes the at least one processor 104. The processor 104 may include any one or more of a central processing unit (CPU), a graphics processing unit (GPU), an application specific instruction set processor (ASIP) of any other suitable processing device. The processor 104 and the storage 102 are communicatively coupled over a communications interface such as a bus. Alternatively, to the example shown in Figure 1, the modules 104 to 108 may be implemented using dedicated processing units for each of the modules 106 to 110. For example, dedicated application specific instruction set processors may be provided and each configured to implement one of the modules 106 to 110.

The aircraft component selection system 100 shown in Figure 1 as a single computing device implemented by co-located computing hardware. However, it is to be understood that the aircraft component selection system 100 may comprise distributed computing devices, for example a plurality of distributed computing devices communicatively coupled over a wired or wireless network.

The aircraft component selection system 100 is configured to perform a computer-implemented method for selecting components to be used in an aircraft system using the reliability evaluation module 104, the complexity evaluation module 106, and the multi-objective optimisation function 108. To this end, and as will be discussed further below, the storage 102 may also store component library data 110 representing a plurality of candidate components for the aircraft system and model data 114 representing a model of at least part of an aircraft system.

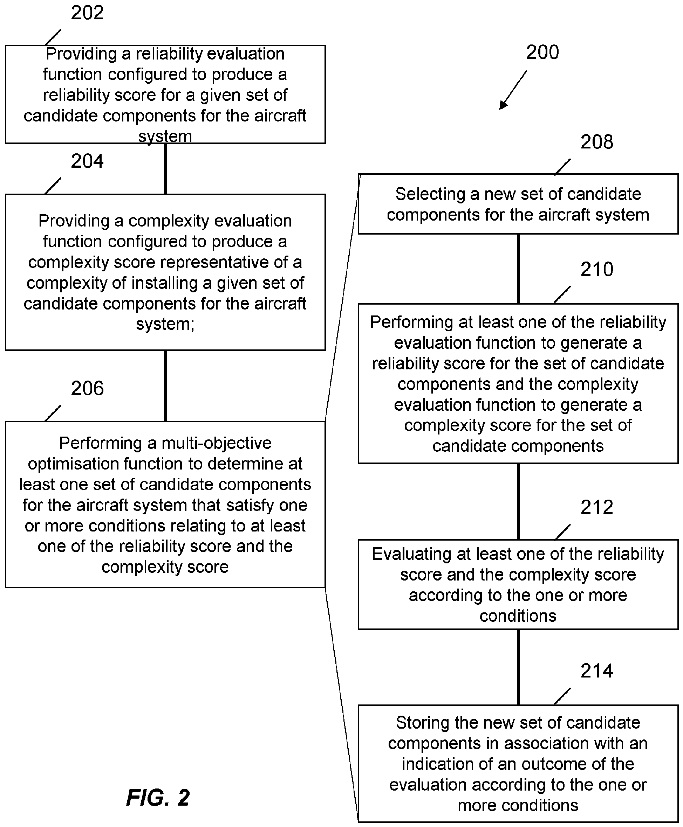

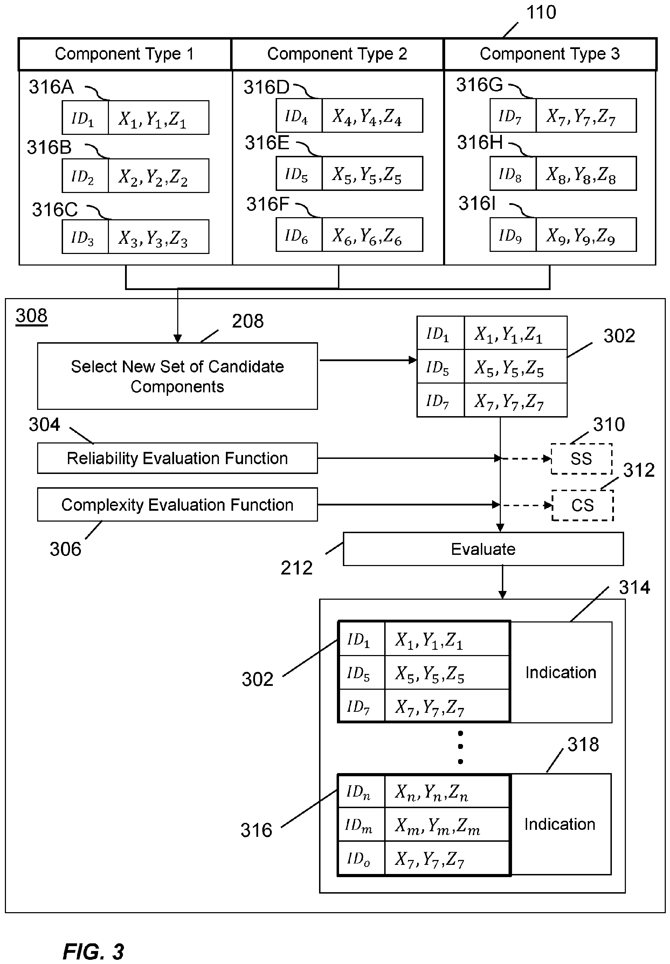

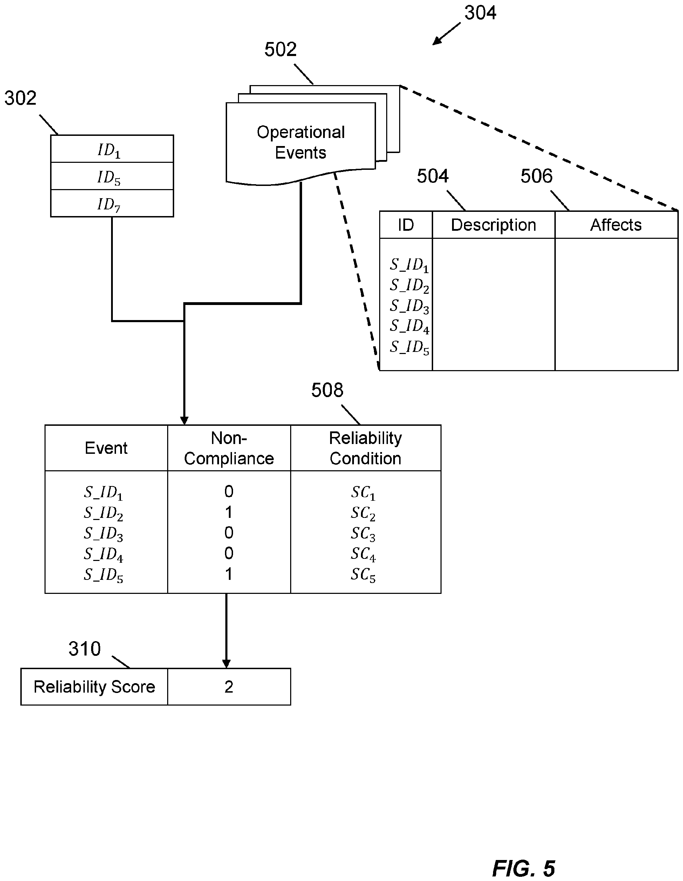

Figure 2 shows a computer-implemented method 200, which is implemented by the aircraft component selection system 100, in the form of a flow chart, while Figure 3 shows the method 200 in the form of a schematic diagram 300. The method 200 comprises providing 202 a reliability evaluation function 304 that is configured to produce a reliability evaluation score 310 for a given set of candidate components for the aircraft system and which is implemented by the reliability evaluation module 104. Detailed examples of the reliability evaluation function 304 will be described further below with respect to Figures 5 to 8B.

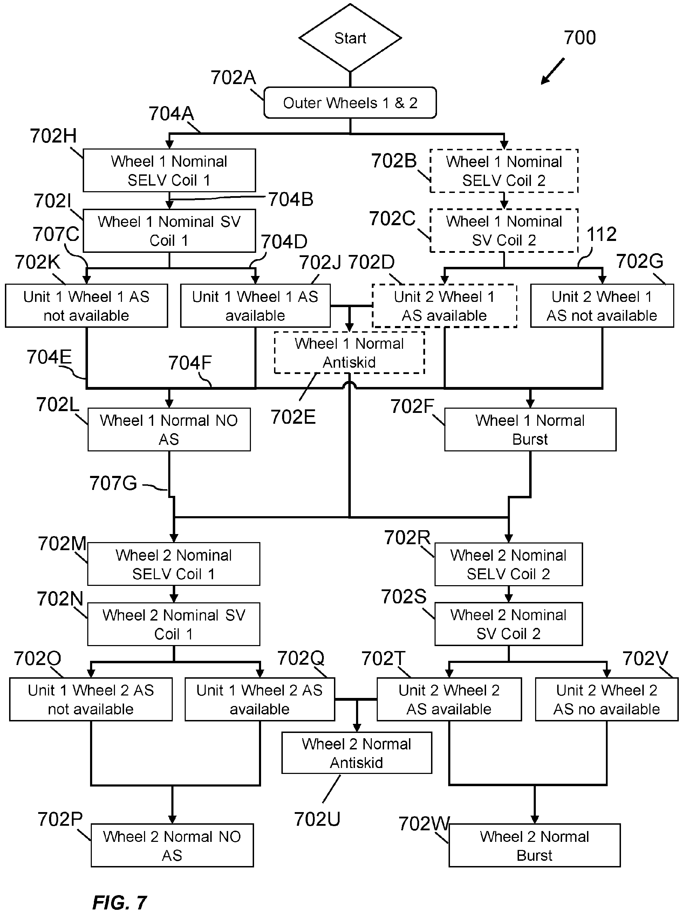

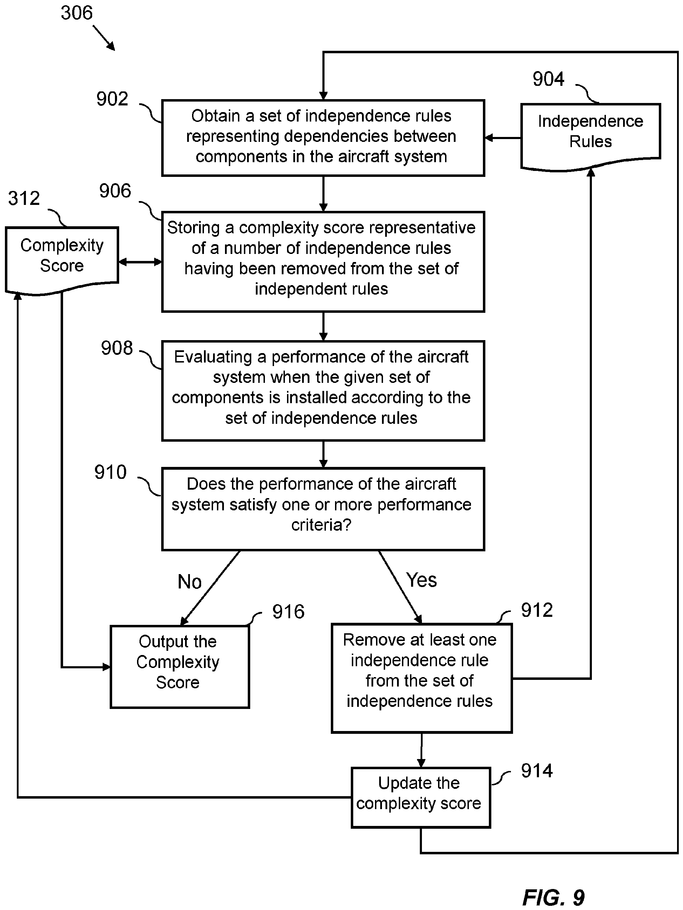

The method 200 also comprises providing 204 a complexity evaluation function 306 that is configured to produce a complexity score 312 representative of a complexity of installing a given set of candidate components for the aircraft system. The complexity evaluation function 306 is provided 204 by the complexity evaluation module 106 in the aircraft component selection system 100. Detailed examples of the complexity evaluation function 306 will be described further below with respect to Figures 7 and 9.

A multi-objective optimisation function 308 is performed 206 to determine at least one set of candidate components 302 for the aircraft system that satisfy one or more conditions relating to at least one of the reliability score 310 and the complexity score 312. While the set of candidate components 302 is shown to include three candidate components it will be appreciated that the set of candidate components 302 may include any number of components. In some cases, the set of candidate components 302 includes many more than three components, such as fifty or more, components.

The multi-objective optimisation function 308 is configured to iteratively select and test sets of candidate components using the evaluation of previous sets of candidate components to guide the selection of subsequent sets of candidate components. This enables the identification of one or more sets of candidate components which provide a desired performance according to at least one of the reliability score 310 and/or the complexity score 312. For example, a condition may be provided to the multi-objective optimisation function 308 that specifies a minimum reliability score to be achieved by target sets of candidate components identified by the multi-objective optimisation function 308. The multi-objective optimisation function 308 may then identify sets of candidate components for the aircraft system that meet the minimum reliability score 310, and are determined by an optimisation process which prioritises one or more further criteria such as the complexity score 312 and/or other characteristics of the aircraft system such as overall weight or cost. Criteria for evaluating an aircraft system include at least one of the reliability score 310 and the complexity score 312, and/or any of a weight, or mass, of the aircraft system, a recurring cost indicator representative of a relative cost of maintaining the aircraft system during operation, or an upfront cost indicator representative of an initial cost required to manufacture the aircraft system.

Alternatively, or additionally, to setting a minimum threshold for one or more criteria, a weighting between two or more optimisation criteria, such as the reliability score 310 and the complexity score 312 may be set as a condition for the multi-objective optimisation function 308. In this way, the multi-objective optimisation function 308 may identify sets of candidate components that represent a specified trade-off between two or more optimisation criteria. That is to say, that the multi-objective optimisation function 308 may be configured to minimise or maximise each of a set of criteria while operating within a constraint that specifies a prioritisation one or more of the set of criteria based on a weighting.

Performing the multi-objective optimisation function 308 involves selecting 208 a new set of candidate components 302 for the aircraft system and performing at least one of the reliability evaluation function 304 and the complexity evaluation function 306 to generate a reliability score 310 and/or a complexity score 312 for the new set of candidate components 302. An evaluation 212 of at least one of reliability score 310 and a complexity score 312 is performed according to the one or more conditions, and the new set of candidate components 302 is stored in association with an indication 314 of an outcome of the evaluation 212.

Performing the multi-objective optimisation function 308 includes iteratively performing the process described above and illustrated in Figure 3 within the box 308 representing the multi-objective optimisation function 308. In this way the multi-objective optimisation function 308 may be configured to store a plurality of sets of candidate components 316 and their associated indications 318 representing the outcome of their respective evaluations 212. The selection 208 of the new set of candidate components 302 in each iteration of the multi-objective optimisation function 308 may be guided based on the outcomes of previous evaluations 212 relating to sets of candidate components. In this way, with each iteration, the multi-objective optimisation function 308 may improve on the selection of the set of candidate components 302 with respect to the conditions for which the multi-objective optimisation function 308 is configured to evaluate the sets of candidate components 302. A new set of candidate components 302 is a set of candidate components including at least one different component as compared to all previously selected sets of candidate components.

In some examples, the multi-objective optimisation function 308 may include the use of a machine learning algorithm, such as a genetic algorithm, to guide the selection of new candidate components 302 in each iteration based on the outcomes of the evaluations 212 of previously selected sets of candidate components. Genetic algorithms (GAs) provide methods for solving both constrained and unconstrained optimization problems based on a natural selection process that is intended to mimic biological evolution. Genetic algorithms involve repeatedly modifying a population of individual solutions in which, at each step, a set of individual solutions are selected as parent solutions and used to generate a successive generation using some random modification of the parent solutions. The selection of the individual solutions may be at least partially random and/or may include the selection of individual solutions based on their performance according to one or more conditions or goals. In this way, with each successive generation, the population evolves toward an optimal solution with respect to defined one or more conditions.

When applied to the present examples, the genetic algorithm may treat each set of candidate components 302 as an individual solution within a population of solutions. Selecting 208 a new set of candidate components 302 may comprise processing stored sets of candidate components 316 and their associated indications 318 to identify a promising set of candidate components, for example, based on their respective performance according to the one or more conditions. A new set of candidate components 302 may then be selected by modifying one or more of the components in the promising set of candidate components either by random mutation or guided according to a neural network.

In this way it becomes possible to objectively evaluate the performance of different selections of sets of candidate components 302 and to converge one or more sets of candidate components which provide a desired level of performance.

In some examples, the genetic algorithm may be a non-dominated sorting genetic algorithm (NSGA). An NSGA is a type of genetic algorithm in which the survival selection and subsequent population generation is modified as compared to general genetic algorithms. In particular, NSGAs may, when selecting individual solutions to propagate, order potential individual solutions based on both rank, with respect to performance against the one or more conditions, and a crowding distance indicative of the similarity of the individual solutions to other individual solutions. In this way, the NSGA may stimulate variation in each subsequent population generation in order to increase the exploration of solutions outside of local minima or maxima.

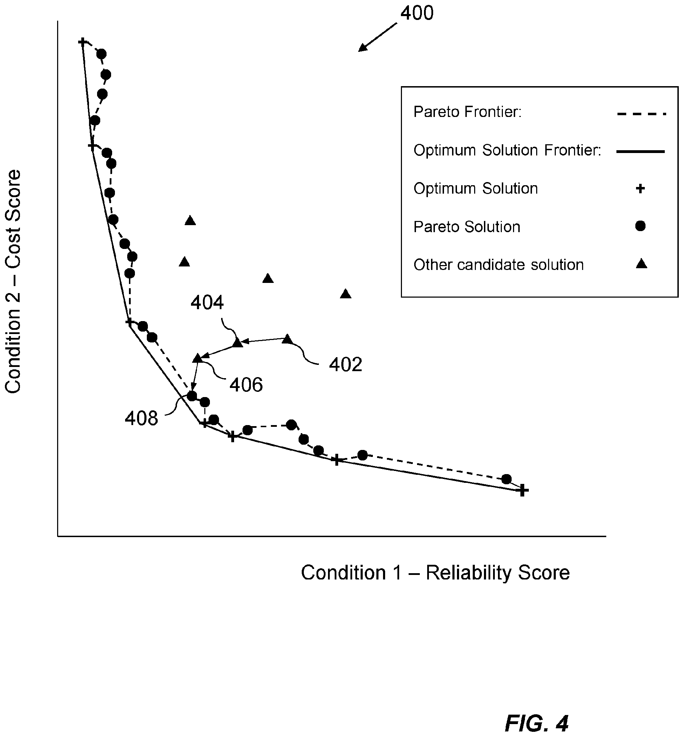

In some examples, the multi-objective optimisation function 308 may include generating a plurality of sets of candidate components for the aircraft system representing a pareto frontier. A pareto frontier is a representation of a set of pareto efficient solutions to multi-objective optimisation problems. Pareto efficient solutions are solutions for which no improvement can be made to the performance of a given solution with respect to one condition, without reducing the performance of the given solution with respect to another condition. Figure 4 shows a graph 400 representing an outcome of the multi-objective optimisation function 308 in which a plurality of sets of candidate components representing a pareto frontier 402 have been identified. In the example shown in Figure 4, the one or more conditions used when performing the multi-objective optimisation include reliability, characterised by a reliability score 310, and a cost of the aircraft system, characterised by a cost score.

Each point shown on the graph 400 of Figure 4 represents a different set of candidate components and the position of the points on the graph is indicative of an associated reliability score 310 and a cost score for these sets of candidate components. The points shown using circles represent the sets of candidate components which are included in the pareto frontier. Points shown using a triangle represent sets of candidate components which are generated when performing the multi-objective optimisation function 308 and before pareto frontier solutions are identified. An example of the evolution of the sets of candidate components used to arrive at the pareto frontier solutions is shown using arrows. In this example, an initial set of candidate components 402 may be selected. This set of candidate components 402 is evaluated according an associated reliability score and an associated cost score. This set of candidate components 402 is selected from a plurality of sets of candidate components as being a promising set of candidate components. A further set of candidate components 404 is generated based on this initial set of candidate components 402. The process is repeated until a set of candidate components is found for which improvement in one of the conditions (e.g. reliability score 310) cannot be achieved without a degradation of the performance of the set of candidate components with respect to the other condition (e.g. cost

Where a plurality of sets of candidate components 302 satisfying the one or more conditions are determined by the method 200 the method 200 may comprise selecting one or more of the stored sets of candidate components 302 for the aircraft system based on their associated indications of the outcomes of the evaluations according to the one or more conditions. In examples where a pareto frontier is generated, this selection may include identifying large changes in gradient along the pareto frontier, and evaluating the sets of candidate components represented by each of the adjacent pareto solutions located with the large change in gradient. It has been found that large changes in gradient in the pareto frontier may be indicative of one of the solutions near, or adjacent to, this change in gradient being a relatively inefficient solution. The two or more sets of candidate components adjacent to, or neighbouring, the large change in gradient may be compared according to their corresponding scores such as reliability score 310, or other scores, and one the sets of candidates may be removed. What is considered to be a large change in gradient may be determined based on a threshold change in gradient. The threshold change in gradient may be fixed, variable, and/or selectable or tuneable. For example, in some cases the method 200 may include obtaining a specific number of sets of candidate components at the output. In this case, the threshold may be tuned until enough of the sets of candidate components have been removed such that the remaining number of sets of candidate components is equal to or lower than the specific number of sets of candidate components.

Returning briefly to Figure 3, the multi-objective optimisation function 308 may select the sets of candidate components 302 from a component library represented in component library data 110. The component library data 110 represents a plurality of candidate components 316A to 316I. Each candidate component 316A to 316I has a respective identifier, $ID_n$, in the component library data 110 and is associated with a set of component characteristics $X_1$, $Y_1$, $Z_1$. These characteristics may include, for example, an upfront cost, a weight, an indication of a recurring maintenance or running cost, and so forth. These characteristics may be used during the multi-objective optimisation function 308, wherein conditions relating to these characteristics may be used as target conditions for the optimisation process. The candidate components 316A to 316I stored in the component library data 110 may be categorised according to one or more component types. In this case, selecting candidate components 208 may include selecting one or more candidate components from each component type. The method 200 may include obtaining the component library data 110 so that this data 110 can be used for the reliability and complexity evaluation functions.

Obtaining the component library data 110 may include constructing the component library data 110 based on data that has been fetched from one or remote computing systems. For example, aircraft component manufacturers and/or component suppliers may maintain databases storing component descriptor data for the components which they sell and otherwise provide to aircraft manufacturers. In practice, there may be a plurality of different component manufacturers from which components are sourced when designing and manufacturing aircraft. As such, obtaining the component library data 110 may include accessing one or more remote computing devices to fetch descriptor data describing the candidate components and their associated capabilities, and constructing the component library data 110 from this fetched data. To this end, it will be appreciated that the aircraft component selection system 100 may additionally comprise one or more communications modules, not shown, configured to communicate with one or more remote computing devices over a network, such as the internet.

In examples where component manufacturers maintain respective databases, on which is stored aircraft component descriptor data, these databases may be available online, that is on the internet, according to a distributed computing architecture. These component manufacturers may publish their component descriptor data and enable access through the use of standard Application Programming Interfaces, APIs, Common Object Request Broker Architecture (CORBA), and so forth. In this case, the system 100 may be configured to communicate using these standards and protocols.

The component descriptor data maintained by different component manufacturers may be stored in a different format and/or include different descriptor data. In this case, obtaining the component library data 200 may further include processing the fetched component descriptor data to identify one or more characteristics of each candidate component, including a respective altered operational mode probability value for each of the candidate components. Processing the fetched data in this case, may include the use of Natural Language Processing, or "NLP", to parse descriptors represented in the descriptor data and to associate these descriptors with common characteristics associated with each type of candidate component.

In alternative examples, the component library data 110 may be pre-generated, which is to say stored in the storage 102 before implementation of the method 200, and obtaining the component library data 110 may comprise reading the data 110 from the storage 102. The component library data 110 may also be at least partially stored in storage that is external to the storage 102.

In some cases, the multi-objective optimisation function 308 may be performed to determine at last one set of candidate components 302 that satisfy two or more conditions relating to one or more target component characteristics and at least one of the reliability score 310 and the complexity score 312. In this example, a component characteristic score may be determined from the component characteristics $(X_1, Y_1, Z_1)$, $(X_5, Y_5, Z_5)$, and $(X_7, Y_7, Z_7)$ for the selected set of components 302. The component characteristic score may be configured to represent a performance of the set of candidate components 302 according to one of the component characteristics. One such example is where the component characteristic score is a weight score, generated based on the combined weights of each of the components 316A, 316E, and 316G in the set of candidate components 302. In other examples, the component characteristic score may be a composite measure of a plurality of component characteristics for the selected set of candidate components 302. In this case, each of the potential component characteristics, such as weight, upfront cost, recurring cost and so forth, may be weighted and combined into a single component characteristic score which may be used for the multi-objective optimisation function 308.

*Reliability Evaluation Function*

In some examples, the reliability evaluation function 302 may involve evaluating the likelihood of one or more operational events, that are outside of the normal operational specifications, occurring during operation of the aircraft system. These operational events may also be referred to as altered operational states of the aircraft system. Each operational event, or altered operational state, may be caused by one or more components in the aircraft system undergoing a transition into an altered operational mode that is outside of normal design specifications for the component. Each candidate component for the aircraft system may be associated with an altered operational mode probability value representative of the likelihood, or rate, of the respective component entering an operational mode that is outside normal operational specifications, also referred to as an altered operational mode. Some candidate components may have multiple potential altered operational modes. In this case, corresponding altered operational mode probability values may be provided for each, or groups of, potential altered operational modes for a candidate component. The reliability score 310 for a set of candidate components 302 may be determined based on calculated likelihoods of the set of candidate components encountering one or more operational events outside of the design specifications during operation in an aircraft system that put them into an altered operational mode.

Figure 5 shows an example of the reliability evaluation function 304 schematically. In this example, the reliability evaluation function 304 comprises obtaining a plurality of operational events 502. These operational events 502 may be represented in data by a description of the operational event 504 and an effect of the operational event 506 with respect to the aircraft system. The reliability evaluation function 304 may then involve, for each said operational event 502, determining whether the given set of candidate components 302 complies with a respective reliability condition 508 for the said operational event. The reliability score 310 may then be generated for the set of candidate components 302 based on a number of the operational events for which the set of candidate components 302 does not comply with the respective reliability condition. In the example shown in Figure 5, there are two operational events $S\_ID_2$ and $S\_ID_5$ for which the set of candidate components 302 does not comply with the respective reliability conditions $SC_2$ and $SC_5$ and hence the resulting reliability score 310 is 2.

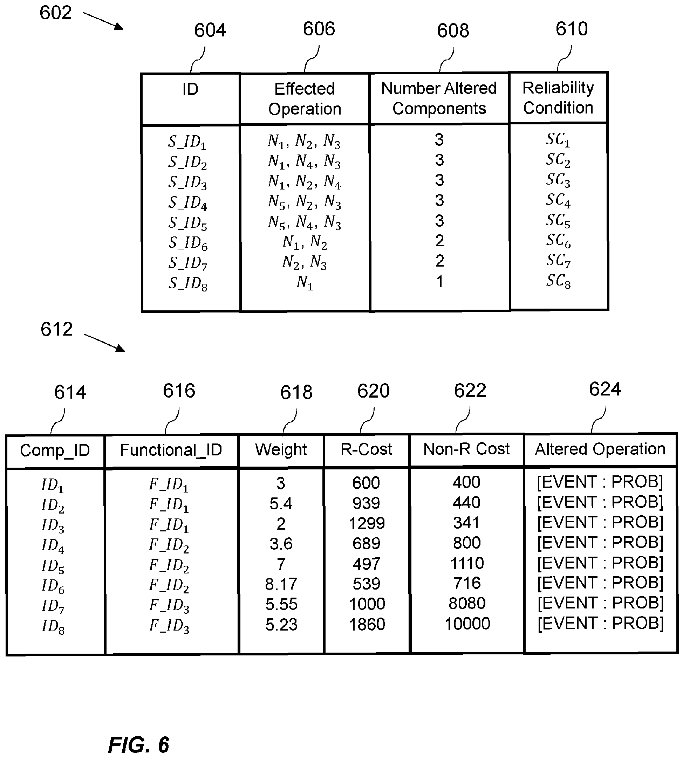

In some examples, determining whether the set of candidate components 302 comply with the respective

reliability condition $SC_n$ for a said operational event includes evaluating the likelihood of the operational event occurring for the set of candidate components 302 and determining whether the likelihood exceeds a maximum likelihood threshold for the operational event. Figure 6 shows further examples of data 602 representing the plurality of operational events, and the component library data 604 which may be used to determine the reliability score. The plurality of operational events are stored in a table 602, which identifies the event 604 with scenario, or event, identifiers. The effected operation of the aircraft system in the operational event is described under "Effected Operation" 606 in which the data refers to functions in the aircraft system which are unavailable during the operational event. The number of components having entered an altered operational mode is described under "Number of Altered Components" 608, and the reliability condition is defined under "Reliability Condition" 610. The reliability conditions 610, represented in the table 602, may specify a maximum likelihood threshold for each respective operational event. The maximum likelihood being indicative of a maximum allowed likelihood of the operational event occurring during operation of the aircraft system. It will be appreciated that while all of these variables are shown as included in the table 602, the table 602 may alternatively include references to one or more further tables in which these variables are stored.

The component library in Figure 6 is shown in the form of a table 612 which includes an identifier 614 for each component representing the specific candidate component, a functional identifier 616 for each component representative of the type or function of each component, an indication of weight or mass 618, a recurring cost "R-Cost" indication 620, and a non-recurring cost "Non-R Cost" indication 622 for the candidate component. The table 612 also includes, for each candidate component, an indication 624 of an altered operational mode and associated altered operational mode probability value representing the likelihood of the component operating in the altered operational mode.

In this case, determining whether the set of candidate components 302 comply with the respective reliability condition $SC_1$ for a said operational event $S\_ID_1$ involves determining a maximum likelihood threshold for the said operational event, which may be specified in the reliability condition $SC_1$ as described above. A likelihood of the said operational event may be determined based on respective altered operational mode probability values 624 associated with the given set of candidate components 302. For example, where an operational event involves three candidate components $ID_1$, $ID_5$, $ID_7$ entering an altered operational mode, the likelihood of the operational event $SC_1$ for the set of candidate components may be determined by multiplying the individual altered operational mode probability values associated with each of the three candidate components $ID_1$, $ID_5$, $ID_7$. It may then be determined whether the likelihood of the said operational event $S\_ID_1$ exceeds the maximum likelihood threshold, as specified in the associated reliability condition $SC_1$.

A given set of candidate components 302 may comply with a respective reliability condition $SC_1$ for a said operational event $S\_ID_1$ if the likelihood of the operational event occurring is less than the maximum likelihood threshold for the operational event.

In some examples, the reliability condition $SC_1$ may specify an absolute maximum likelihood threshold which is used for the evaluation of all sets of candidate components 302. However, in other examples, the reliability conditions may be dynamic. To this end, in some examples, a model of the aircraft system may be used in the reliability evaluation function 304.

Examples of the use of a model will now be described with reference to one specific example in which the aircraft system is a braking system. Figure 7 shows an example of a graph model 700 representing a braking system in an aircraft. The graph model 700 comprises a set of nodes 702A to 702W connected by a corresponding set of directed edges 704A to 704G. Only five of the directed edges 704A to 704G have been labelled in the Figures for clarity. The set of nodes 702A to 702W each represent a function of a component, or a piece of equipment, in the at least part of the aircraft system. In the present example each node 702A to 702W represents an operational mode of a component in the aircraft system. These operational modes may include controlling a plurality of lower level components to provide these operational modes. However, in other examples, not shown, some or all nodes 702A to 702W may represent low-level operations, such as the actuation of a valve or switch. The directed edges 704A to 704G indicate a control flow which defines the dependencies between nodes 702A to 702W.

The part of the braking control system shown in the graph model 700 represents the braking system for a first wheel and a second wheel of an aircraft according to primary braking componentry. In particular, the nodes 702A to 702W show how different actuators and controllers in the braking control system can be activated to put each of the wheels in a normal antiskid braking mode 702E and 702U, a burst mode 702F and 702W, or a no antiskid braking mode 702L and 702P. The graph model 700 may be associated with one or more further models of the aircraft system which represent the physical layout and/or the avionic control systems for controlling the aircraft system. For example, the graph model 700 representing the functionality of the braking system may be generated based one or more underlying and interrelated models representing the physical and avionic componentry.

Where a graph model 700 is used to represent the braking system, an evaluation of the model 700 may be used to determine the maximum likelihood threshold for each operational event. For example, a said operational event may include three candidate components $ID_1$, $ID_5$, $ID_7$ of the set of candidate 302 components entering altered operational modes, the graph model 700 may be modified to represent the altered operational modes of those three candidate components. This is shown in Figure 7 by modifying the nodes 702B, 702C, 702D, and 702E, which are not operational during the operational event, to be shown in broken lines. The model 700 may then be evaluated to determine how the braking system operates without the function of these nodes 702B, 702C, 702D, and 702E. The operational event may then be categorised according to a severity, with different severities being associated with different maximum likelihood thresholds. For example, where the braking system has sufficient redundancies that a lack of operation of these nodes 702B, 702C, 702D, and 702E does not affect an overall braking performance, the operational event may be categorised as a minimal impact event, or a normal event. Where the braking system is not able to provide a desired braking performance without the function of these nodes 702B, 702C, 702D, and 702E, the operational event may be categorised as a critical event. Critical events may have lower maximum likelihood thresholds than other types of events such as minimal impact, or normal events. Operational events which cause the braking system to operate in a manner outside of normal design specifications but while still providing sufficient braking performance may be categorised as alternative operation events and associated with a maximum likelihood threshold between the maximum likelihood thresholds associated critical events and minimal impact events.

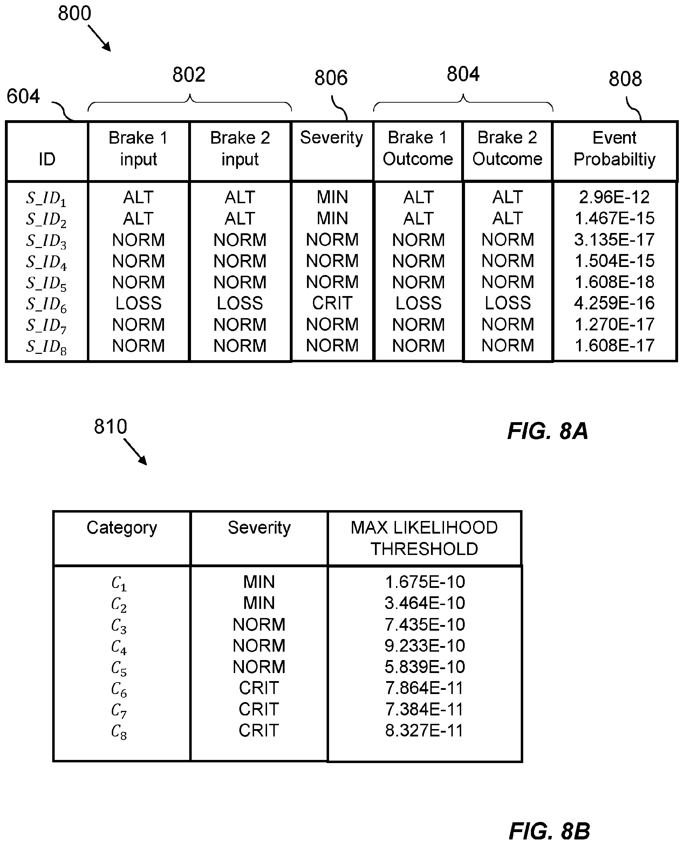

Figure 8A shows a table 800 storing an outcome of a reliability evaluation for the set of candidate components 302 using the graph model 700. The table includes an indication of the operational event 604, indications 802 of how the input to the brakes functions during the operational event, an indication of the severity of the event 806, and an operational event probability 808, which is based on the altered operational mode probability values of the components affected in the respective operational event. In some cases, there may additionally be indications 804 of how the output of the brake function 804 is affected during the operational event. For the input and output to the brakes, the table stores an indication of whether the function is normal (NORM), altered (ALT), or is lost or not functioning (LOSS). However, the indications 804 relating to the output of the brake function may not be available for all operations events 604 and so may be included for only some events 604, or not at all, as will become apparent from the following description of Figure 8B.

The severity of the operational event 806 may be used to determine the maximum likelihood threshold for the respective operational event. For example, operational events associated with a critical severity may be assigned a low maximum likelihood threshold, while operational events associated with a normal or minimal severity, maybe assigned a higher maximum likelihood threshold.

In some examples, operational event category data representing a plurality of operational events categories for the aircraft system may be obtained. Figure 8B shows the operational event category data 810 which includes a list of event categories, their associated severity, and a maximum likelihood threshold for each said event category. Given the large number of potential combinations of components entering altered operational modes that are available for aircraft systems including a large number of components, explicitly evaluating and determining a maximum likelihood threshold for each operational event for each set of candidates may be burdensome. As such, when determining a maximum likelihood threshold for a given operational event for a set of candidate components 302, the method 200 may involve selecting an altered operational event category based on an evaluation of the operational event. This may include, for example, identifying the effects and severity of the operational event, as shown in table 800, and selecting an operational event category that is most similar to the operational event being evaluated. The maximum likelihood threshold for the operational event may then be identified from the entry in the data 810 related to the selected operational event category.

This pre-calculation of maximum likelihood thresholds and matching to operational events under evaluation enables targeted, and accurate, maximum likelihood thresholds to be determined which are specific to the outcomes of an operational event for a given set of candidate components, without unduly increasing the computational expense on the system 100. This in turn increases both the robustness and accuracy of the reliability evaluation function 304.

In addition to a maximum likelihood threshold for each operational event, the reliability evaluation function 304 may also be sensitive to a marginal likelihood threshold for each operational event. The maximum likelihood threshold may correspond to standards-based thresholds providing a lower limit for the reliability of the aircraft system. However, designers of aircraft system may decide to set a marginal likelihood threshold that represents an increased reliability for the aircraft system than otherwise determined based on maximum likelihood thresholds

In some examples, determining whether a given set of candidate components 302 complies with a respective reliability condition $SC_1$ for a said operational event involves determining a marginal likelihood threshold representing a lower likelihood than the maximum likelihood threshold for the operational event. It is then determined whether the likelihood of the said operational event exceeds the marginal likelihood threshold. If the likelihood of the operational event exceeds the marginal likelihood threshold then the set of candidate components 302 may not satisfy the reliability condition $SC_1$.

Alternatively, if the likelihood of the operational event exceeds the marginal likelihood threshold for the operational event and is less than the maximum likelihood threshold for the operational event, then the set of candidate components 302 may have a marginal compliance for that operational event. In examples where marginal compliances are defined for each operational event, the reliability score 310 may be determined based on both the non-compliances and the marginal compliances. In one such example, the reliability score 310 is generated from a sum of the non-compliances and a weighted sum of the marginal compliances as shown below in equation 1:

$$Reliability\ Score = \sum_{OE} NC + w \sum_{OE} MC$$

(1)

Wherein NC represents non-compliance, MC represents marginal compliance, and w represents a weight value between 0 and 1.

In some examples, the method 200 may include a process for obtaining the operational events 502. In some cases, due to the total number of components to be included in the aircraft system and the potential combinations of altered operational modes for one or more of the candidate components the total number of potential operational events may be reduced to increase the efficiency of the reliability evaluation function 304.

To this end, obtaining the plurality of operational events 502 may include determining a set of component types for the aircraft system, each component type being associated with two or more of the candidate components for the aircraft system. For example, the different functional IDs 616 indicated in the table 612 may each relate to a different component type. An initial set of operational events each representing an altered operational mode of at least one of the component types may be generated. For example, all possible combinations of altered operational modes for the candidate component types may be defined. Where the aircraft system comprises three component types there may be seven possible operational events each involving one, two, or three of the component types entering an altered operational mode. The number of potential operational events increases drastically as the total number of component types for an aircraft system increases.

A worst-case likelihood for each of the initial set of operational events may be determined, for example by determining the product of worst-case altered operational mode probability values for candidate components associated with each of the component types. To determine the worst-case likelihood, the candidate component library data 612 may be processed to identify a candidate component for each component type that is operating in an altered mode according to the operational event and that represents a worst-case likelihood value, which is to say a highest likelihood of that component type entering an altered operational mode. The initial set of operational events may then be modified by removing operational events for which the associated worst-case likelihood is below a maximum likelihood threshold. The modified set of operational events may then be output and used as the plurality of operational events 502.

*Complexity Evaluation Function*

Complexity evaluation of an aircraft system provides a complex challenge to quantify in modern aircraft system design. Examples described herein aim to provide a metric for evaluating complexity of an aircraft system which can be used to increase the interdependency between components such that the number of separate avionic control systems can be reduced. Reducing the number of separate avionic control systems, and independent wiring schemes required to support these avionic controls systems, for each component may reduce the burden of installation of the aircraft system, and the burden of ongoing maintenance to the aircraft system. Reducing complexity may also reduce the weight and cost of the aircraft system as less wiring, and fewer redundant components, may be included in the aircraft system while still providing a desired level of reliability and performance. In some cases, it may also become possible to reduce the number of separate actuation backups due to a reduced interdependency between components.

Figure 9 shows, schematically, an example of the complexity evaluation function 306. In this example, the complexity evaluation function 306 includes an iterative process which is performed to determine a minimum level of complexity that may be afforded to the aircraft system when a given set of candidate components 302 are to be used in the aircraft system. The complexity evaluation function 306 includes obtaining 902 a set of independence rule 904 representing dependencies between components of the aircraft system. For example, the independence rules may specify whether certain components should be wired independently, whether the function of one component is allowed to alter the operation of each other component in the system, and so forth. In some cases, the independence rules 904 may be expressed in a table, not shown, in which each of the set of candidate components is provided a respective row and a respective column. The table is then populated with indications as to whether a component of each given row is independent of, or dependent on, other components represented by the columns.

Alternatively, the independence rules 904 may be expressed a set of modifications to be made to the graph model 700. For example, where two components are independent from one another, independent paths through the graph model 700 should be provided for each of these two components. Where two components are dependent on one another, paths through the graph model 700 may be allowed to include both components and independent paths may not need to be provided.

A complexity score 312 is stored 906 that represents a number of independence rules that have been removed from the set of independence rules 904. When the complexity evaluation function 306 performs its first iteration, the complexity score 312 that is stored may take a value of zero and the set of independence rules 904 may be a default set of independence rules for the aircraft system.

The performance of the aircraft system when the given set of components 302 is installed according to the set of independence rules 904 is then evaluated 908. The evaluation 908 may include evaluating the performance of the aircraft system with respect to one or more design goals, and/or a reliability performance. The design goals may relate to goals such as desired weight, cost, maintainability, and so forth. The evaluation 908 may include evaluating the model 700 of the aircraft system to determine how the aircraft system performs when installed according to the set of independence rules 904. In some examples, the evaluation 908 may include implementing the reliability evaluation function 304.

The performance of the aircraft system, when installed according to the set of independence rules 904, is then compared 910 to one or more performance criteria. These performance criteria could be, for example, a reliability criteria, or where the aircraft system is a braking system, a braking force criteria.

If the performance of the aircraft system satisfies the one or more performance criteria, then one or more independence rules are removed 912 from the set of independence rules 904, and the complexity score 312, is updated 914 to reflect the total number of independence rules that have been removed. In this way, the complexity evaluation function 306 is able to determine how much the complexity of the aircraft system can be reduced when using the given set of components 302 while still affording a desired level of performance with respect to the performance criteria. In this example, a higher complexity score 312 represents a less complex aircraft system, and a lower complexity score 312 represents a more complex system.

A genetic algorithm may be used to perform an optimisation of the independence rules that are to be removed. The use of a genetic algorithm may prevent the optimisation from settling on a local minima. For example, as closely related independence rules are removed the system performance may fall below the one or more performance criteria after a specific independence rule is removed. However, there may be other independence rules associates with other components or avionic control systems that are not relevant to the closely related independence rules. Genetic algorithms may increase variation in the selection of independence rules for removal, whilst providing targeted optimisation.

If it is determined in an iteration, that the performance of the aircraft does not, or no longer, satisfies the performance criteria, then the complexity evaluation function may output 916 the complexity score 312. The complexity evaluation function 306 may then stop iterating once the complexity score 312 has been output 916, thereby providing a final value for the complexity score of the given set of candidate components 302.

While the complexity score 312 has been described as a single score, it is to be appreciated that the complexity score 312 may be devolved into two separate complexity scores. A first complexity score may relate to the complexity of the aircraft system, indicative of the number of connections or routes between components. The second complexity score may be an intrinsic complexity score relating to the specific, or average, complexity of a given component or group of components, wherein intrinsic complexity may relate to the maintenance, installation, operational, or troubleshooting complexity of a given component. Where two, or more, separate complexity values are used they be considered separately in the evaluations, or may be combined into a single complexity score, for example, based on a given weighting.

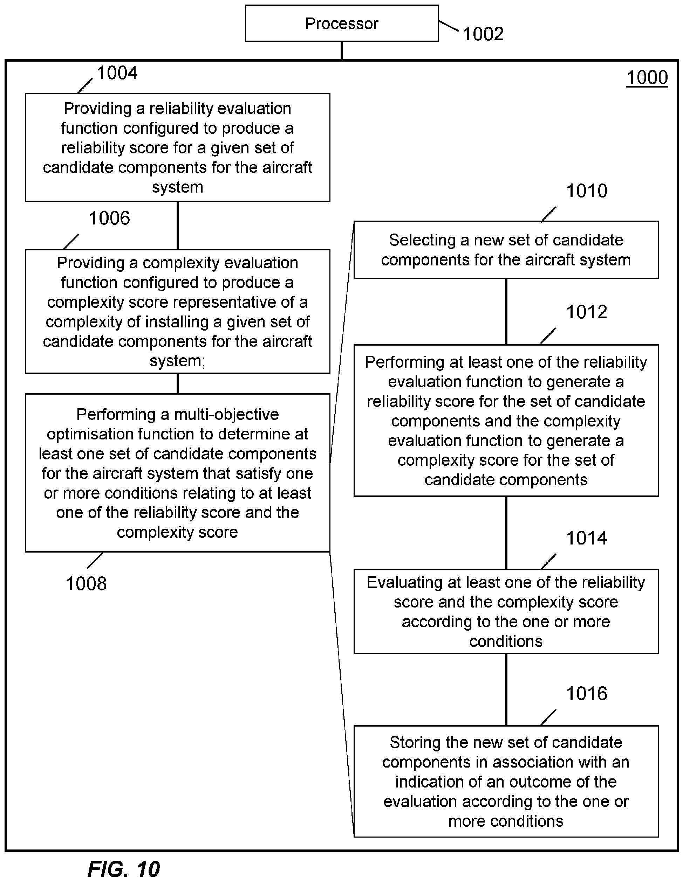

Figure 10 shows a non-transitory computer-readable storage medium 1000 comprising computer-executable instructions which, when executed by a processor 1002 cause the processor 1002 to perform a computer-implemented method 200 for selecting components to be used in an aircraft system. The instructions include a first instruction set 1004 which causes the processor 1002 to provide a reliability evaluation function configured to produce a reliability score for a given set of candidate components for the aircraft system. A second instruction set 1006 causes the processor 1002 to provide a complexity evaluation function configured to produce a complexity score representative of a complexity of installing a given set of candidate components for the aircraft system. A third instruction set 1008 causes the processor to perform a multi-objective optimisation function to determine at least one set of candidate components for the aircraft system that satisfy one or more conditions relating to at least one of the reliability score and the complexity score. The third instruction set 1008 includes instructions to iteratively, select 1010 a new set of candidate components for the aircraft system, perform 1012 at least one of the reliability evaluation function to generate a reliability score for the set of candidate components and the complexity evaluation function to generate a complexity score for the set of candidate components, evaluate 1014 at least one of the reliability score and the complexity score according to the one or more conditions, and store 1016 the new set of candidate components in association with an indication of an outcome of the evaluation according to the one or more conditions.

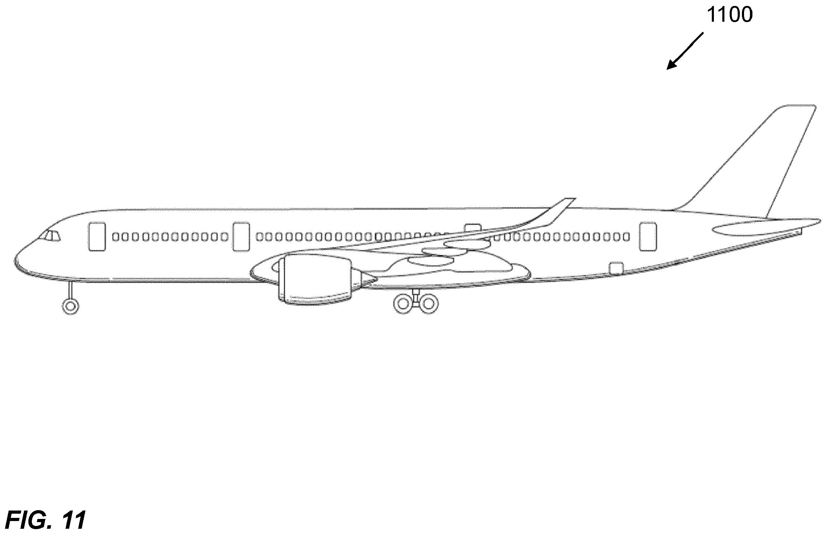

Figure 11 shows an aircraft 1100 comprising at least one aircraft system, such as a braking system, in which the components included in the aircraft system have been selected from one or more stored sets of candidate components and associated indications of the outcome of respective evaluations of the sets of candidate components determined according to the computer-implemented method 200 described herein.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. It is to be noted that the term "or" as used herein is to be interpreted to mean "and/or", unless expressly stated otherwise.

*Numbered Clauses*

The following numbered clauses describe various examples of the present disclosure.

1. A computer-implemented method for selecting components to be used in an aircraft system, the method comprising:

    providing a reliability evaluation function configured to produce a reliability score for a given set of candidate components for the aircraft system;
    providing a complexity evaluation function configured to produce a complexity score representative of a complexity of installing a given set of candidate components for the aircraft system; and
    performing a multi-objective optimisation function to determine at least one set of candidate components for the aircraft system that satisfy one or more conditions relating to at least one of the reliability score and the complexity score, wherein the multi-objective optimisation function includes iteratively:

        selecting a new set of candidate components for the aircraft system;
        performing at least one of the reliability evaluation function to generate a reliability score for the set of candidate components and the complexity evaluation function to generate a complexity score for the set of candidate components;
        evaluating at least one of the reliability score and the complexity score according to the one or more conditions; and
        storing the new set of candidate components in association with an indication of an outcome of the evaluation according to the one or more conditions.

2. A computer-implemented method according to clause 1, wherein the reliability evaluation function comprises:

    obtaining a plurality of operational events;
    for each said operational event, determining whether the given set of candidate components comply with a respective reliability condition for the said operational event; and
    generating the reliability score for the given set of candidate components based on a number of operational events of the plurality of operational events for which the given set of candidate components does not comply with the respective reliability condition.

3. A computer-implemented method according to clause 2, wherein determining whether the given set of candidate components comply with the respective reliability condition for a said operational event comprises:

    determining a maximum likelihood threshold for the said operational event;
    determining a likelihood of the said operational event based on respective altered operational mode probability values associated with the given set of candidate components; and
    determining whether the likelihood of the said operational event exceeds the maximum likelihood threshold, wherein the given set of candidate components complies with the respective reliability condition for the said operational event if the likelihood of the operational event is less than the maximum likelihood threshold for the operational event.

4. A computer-implemented method according to clause 3, wherein determining whether the given set of candidate components comply with the respective reliability condition for a said operational event comprises:

    determining a marginal likelihood threshold for the said operational event, the marginal likelihood threshold representing a lower likelihood than the maximum likelihood threshold; and
    determining whether the likelihood of the said operational event exceeds the marginal likelihood threshold, wherein the given set of components complies with the respective reliability condition for the said operational event if the likelihood of the operational event is less than the marginal likelihood threshold for the said operational event.

5. A computer-implemented method according to any preceding clause, wherein the method comprises obtaining component library data representative of a plurality of candidate components for the aircraft system, wherein each candidate component is associated with a respective altered operational mode probability value in the component library data.

6. A computer-implemented method according to any one of clauses 3 to 5, wherein obtaining the plurality of operational events includes:

determining a set of component types for the aircraft system, each component type being associated with two or more of the candidate components for the aircraft system;
generating an initial set of operational events each representing an altered operational mode of at least one of the component types;
determining a worst-case likelihood for each of the initial set of operational events based on the altered operational mode probability values associated with the candidate components for the aircraft system; and
modifying the initial set of operational events by removing operational events for which the associated worst-case likelihood is below a maximum likelihood threshold; and
outputting the modified set of operational events as the plurality of operational events.

7. A computer-implemented method according to any one of clauses 3, 4 or 6, wherein the method comprises obtaining operational event category data representing a plurality of altered operational modes for the aircraft system and associating each altered operational mode with a respective maximum likelihood threshold, and wherein determining the maximum likelihood threshold for the said operational event comprises:

selecting an altered operational mode based on an evaluation of the operational event; and
identifying the maximum likelihood threshold corresponding to the selected altered operational mode from the operational event category data.

8. A computer-implemented method according to any preceding clause, wherein the complexity evaluation function comprises, iteratively:

obtaining a set of independence rules representing dependencies between components in the aircraft system;
storing a complexity score representative of a number of independence rules having been removed from the set of independence rules;
evaluating a performance of the aircraft system when the given set of components is installed according to the set of independence rules;
if the performance of the aircraft system satisfies one or more performance criteria:

removing at least one independence rule from the set of independence rules; and
updating the complexity score; and

if the performance of the aircraft system does not satisfy the one or more performance criteria, outputting the complexity score.

9. A computer-implemented method according to any preceding clause, wherein the at least one set of candidate components for the aircraft system satisfy two or more conditions relating to at least the reliability score and the complexity score, wherein the two or more conditions include a target reliability score and a target complexity score.

10. A computer-implemented method according to any preceding clause, wherein

the method comprises obtaining component library data representative of a plurality of candidate components for the aircraft system, wherein each candidate component is associated with respective component characteristics,
the multi-objective optimisation function is performed to determine at least one set of candidate components that satisfy two or more conditions relating to:

one or more target component characteristics; and
at least one of the reliability score and the complexity score; and

wherein the multi-objective optimisation further comprises:

determining a component characteristic score based on the component characteristics associated with the selected set of candidate components; and
evaluating the component characteristic score and at least one of the reliability score and the complexity score according to the two or more conditions.

11. A computer-implemented method according to any preceding clause, wherein performing the multi-objective optimisation function includes generating a plurality of sets of candidate components the plurality of sets of candidate components representing a pareto frontier.

12. A computer-implemented method according to any preceding clause, wherein the multi-objective optimisation function includes a genetic algorithm.

13. A computer-implemented method according to clause 12, wherein the genetic algorithm is a non-dominated sorting genetic algorithm.

14. A computer-implemented method according to any preceding clause, further comprising selecting one or more of the stored sets of candidate components for the aircraft system based on the associated indications of the outcomes of the evaluations according to the one or more conditions.

15. An aircraft component selection system comprising:

storage for storing component library data representing a plurality of candidate components for an aircraft system;
a reliability evaluation module configured to determine a reliability score for a given set of candidate components for an aircraft system;
a complexity evaluation module configured to produce a complexity score representative of a complexity of installing a given set of candidate components for the aircraft system; and
a multi-objective optimisation module for determining at least one set of candidate components for the aircraft system that satisfy one or more conditions relating to at least one of the reliability score and the complexity score, wherein the multi-objective optimisation module is configured to:

select a new set of candidate components for the aircraft system;
control at least one of the reliability evaluation module to determine a reliability score for the set of candidate components and the complexity evaluation module to determine a complexity score for the set of candidate components;
evaluating at least one of the reliability score and the complexity score according to the one or more conditions; and
storing the new set of candidate components in association with an outcome of the evaluation according to the one or more conditions.

16. An aircraft component selection system according to clause 15, wherein, the reliability evaluation module is configured to:

obtain a plurality of operational events;
for each said operational event, determine whether the given set of candidate components comply with a respective reliability condition for the said operational event; and
generate the reliability score for the given set of candidate components based on a number of operational events of the plurality of operational events for which the given set of candidate components does not comply with the respective reliability condition.

17. An aircraft component selection system according to clause 16, wherein determining whether the given set of candidate components comply with the respective reliability condition for a said operational event comprises:

determining a maximum likelihood threshold for the said operational event;

determining a likelihood of the said operational event based on respective altered operational mode probability values associated with the given set of candidate components; and

determining whether the likelihood of the said operational event exceeds the maximum likelihood threshold, wherein the given set of candidate components complies with the respective reliability condition for the said operational event if the likelihood of the operational event is less than the maximum likelihood threshold for the operational event.

18. An aircraft component selection system according to clause 17, wherein determining whether the set of candidate components comply with the respective reliability condition for a said operational event comprises:

determining a marginal likelihood threshold for the said operational event, the marginal likelihood threshold representing a lower likelihood than the maximum likelihood threshold; and

determining whether the likelihood of the said operational event exceeds the marginal likelihood threshold, wherein the given set of components complies with the respective reliability condition for the said operational event if the likelihood of the operational event is less than the marginal likelihood threshold for the said operational event.

19. An aircraft component selection system according to any one of clauses 16 to 18, wherein obtaining the plurality of operational events includes:

determining a set of component types for the aircraft system, each component type being associated with two or more of the candidate components for the aircraft system;

generating an initial set of operational events each representing an altered operational mode of at least one of the component types;

determining a worst-case likelihood for each of the initial set of operational events based on the component altered operational probability values associated with the candidate components for the aircraft system; and

modifying the initial set of operational events by removing operational events for which the associated worst-case likelihood is below a maximum likelihood threshold; and

outputting the modified set of operational events as the plurality of operational events.

20. An aircraft component selection system according to clause any one of clauses 17 to 19, wherein the reliability evaluation module is configured to obtain operational event category data representing a plurality of altered operational modes for the aircraft system and associating each altered operational mode with a respective maximum likelihood threshold, and wherein determining the maximum likelihood threshold for the said operational event comprises:

selecting an altered operational mode based on an evaluation of the operational event; and

identifying the maximum likelihood threshold corresponding to the selected altered operational mode from the operational event category data.

21. An aircraft component selection system according to any one of clauses 15 to 20, wherein the complexity evaluation module is configured to, iteratively:

obtain a set of independence rules representing dependencies between components in the aircraft system;

store a complexity score representative of a number of independence rules having been removed from the set of independence rules;

evaluate a performance of the aircraft system when the given set of components is installed according to the set of independence rules;

if the performance of the aircraft system satisfies one or more performance criteria:

remove at least one independence rule from the set of independence rules; and

update the complexity score; and

if the performance of the aircraft system does not satisfy the one or more performance criteria, output the complexity score.

22. An aircraft component selection system according to any one of clauses 15 to 21, wherein the at least one set of candidate components determined by the multi-objective optimisation module satisfy two or more conditions relating to at least one of the reliability score and the complexity score, wherein the two or more conditions include a target reliability score and a target complexity score.

23. An aircraft component selection system according to any one of clauses 15 to 22,

wherein the component library data includes an association between each component and at least one respective component characteristic, and

wherein the multi-objective optimisation module is configured to determine the at least one set of candidate components that satisfy two or more conditions relating to:

one or more target component characteristics; and
at least one of the reliability score and the complexity score; and

wherein the multi-objective optimisation module is further configured to:

determine a component characteristic score based on the component characteristics associated with the selected set of candidate components; and
evaluate the component characteristic score and at least one of the reliability score and the complexity score according to the two or more conditions.

24. An aircraft component selection system according to any one of clauses 15 to 23, wherein the multi-objective optimisation module is configured to output a plurality of sets of candidate components the plurality of sets of candidate components representing a pareto frontier.

25. A non-transitory computer-readable storage medium comprising computer-executable instructions which, when executed by at least one processor, cause the at least one process to perform a method according to any one of clauses 1 to 14.

26. An aircraft comprising an aircraft system in which the components included in the aircraft have been selected from one or more stored sets of candidate components and associated indication of the outcome of the respective evaluation determined according to the computer-implemented method of any one of clauses 1 to 14.

## Claims

1. A computer-implemented method for selecting components to be used in an aircraft system, the method comprising:

providing a reliability evaluation function configured to produce a reliability score for a given set of candidate components for the aircraft system;
providing a complexity evaluation function configured to produce a complexity score representative of a complexity of installing a given set of candidate components for the aircraft system; and
performing a multi-objective optimisation function to determine at least one set of candidate components for the aircraft system that satisfy one or more conditions relating to at least one of the reliability score and the complexity score, wherein the multi-objective optimisation function includes iteratively:

selecting a new set of candidate components for the aircraft system;
performing at least one of the reliability evaluation function to generate a reliability score for the set of candidate components and the complexity evaluation function to generate a complexity score for the set of candidate components;
evaluating at least one of the reliability score and the complexity score according to the one or more conditions; and
storing the new set of candidate components in association with an indication of an outcome of the evaluation according to the one or more conditions.

2. A computer-implemented method according to claim 1, wherein the reliability evaluation function comprises:

obtaining a plurality of operational events;

EP 4 311 784 A1

for each said operational event, determining whether the given set of candidate components comply with a respective reliability condition for the said operational event; and

generating the reliability score for the given set of candidate components based on a number of operational events of the plurality of operational events for which the given set of candidate components does not comply with the respective reliability condition.

3. A computer-implemented method according to claim 2, wherein determining whether the given set of candidate components comply with the respective reliability condition for a said operational event comprises:

determining a maximum likelihood threshold for the said operational event;
determining a likelihood of the said operational event based on respective altered operational mode probability values associated with the given set of candidate components; and
determining whether the likelihood of the said operational event exceeds the maximum likelihood threshold, wherein the given set of candidate components complies with the respective reliability condition for the said operational event if the likelihood of the operational event is less than the maximum likelihood threshold for the operational event.

4. A computer-implemented method according to claim 3, wherein determining whether the given set of candidate components comply with the respective reliability condition for a said operational event comprises:

determining a marginal likelihood threshold for the said operational event, the marginal likelihood threshold representing a lower likelihood than the maximum likelihood threshold; and
determining whether the likelihood of the said operational event exceeds the marginal likelihood threshold, wherein the given set of components complies with the respective reliability condition for the said operational event if the likelihood of the operational event is less than the marginal likelihood threshold for the said operational event.

5. A computer-implemented method according to claim 3 or claim 4, wherein obtaining the plurality of operational events includes:

determining a set of component types for the aircraft system, each component type being associated with two or more of the candidate components for the aircraft system;
generating an initial set of operational events each representing an altered operational mode of at least one of the component types;
determining a worst-case likelihood for each of the initial set of operational events based on the altered operational mode probability values associated with the candidate components for the aircraft system; and
modifying the initial set of operational events by removing operational events for which the associated worst-case likelihood is below a maximum likelihood threshold; and
outputting the modified set of operational events as the plurality of operational events.

6. A computer-implemented method according to any preceding claim, wherein the complexity evaluation function comprises, iteratively:

obtaining a set of independence rules representing dependencies between components in the aircraft system;
storing a complexity score representative of a number of independence rules having been removed from the set of independence rules;
evaluating a performance of the aircraft system when the given set of components is installed according to the set of independence rules;
if the performance of the aircraft system satisfies one or more performance criteria:

removing at least one independence rule from the set of independence rules; and
updating the complexity score; and

if the performance of the aircraft system does not satisfy the one or more performance criteria, outputting the complexity score.

7. A computer-implemented method according to any preceding claim, wherein the multi-objective optimisation function includes a genetic algorithm; and optionally,

wherein the genetic algorithm is a non-dominated sorting genetic algorithm.

8. An aircraft component selection system comprising:

   storage for storing component library data representing a plurality of candidate components for an aircraft system;
   a reliability evaluation module configured to determine a reliability score for a given set of candidate components for an aircraft system;
   a complexity evaluation module configured to produce a complexity score representative of a complexity of installing a given set of candidate components for the aircraft system; and
   a multi-objective optimisation module for determining at least one set of candidate components for the aircraft system that satisfy one or more conditions relating to at least one of the reliability score and the complexity score, wherein the multi-objective optimisation module is configured to:

   select a new set of candidate components for the aircraft system;
   control at least one of the reliability evaluation module to determine a reliability score for the set of candidate components and the complexity evaluation module to determine a complexity score for the set of candidate components;
   evaluating at least one of the reliability score and the complexity score according to the one or more conditions; and
   storing the new set of candidate components in association with an outcome of the evaluation according to the one or more conditions.

9. An aircraft component selection system according to claim 8, wherein, the reliability evaluation module is configured to:

   obtain a plurality of operational events;
   for each said operational event, determine whether the given set of candidate components comply with a respective reliability condition for the said operational event; and
   generate the reliability score for the given set of candidate components based on a number of operational events of the plurality of operational events for which the given set of candidate components does not comply with the respective reliability condition.

10. An aircraft component selection system according to claim 9, wherein determining whether the given set of candidate components comply with the respective reliability condition for a said operational event comprises:

    determining a maximum likelihood threshold for the said operational event;
    determining a likelihood of the said operational event based on respective altered operational mode probability values associated with the given set of candidate components; and
    determining whether the likelihood of the said operational event exceeds the maximum likelihood threshold, wherein the given set of candidate components complies with the respective reliability condition for the said operational event if the likelihood of the operational event is less than the maximum likelihood threshold for the operational event; and optionally, wherein determining whether the set of candidate components comply with the respective reliability condition for a said operational event further comprises:

    determining a marginal likelihood threshold for the said operational event, the marginal likelihood threshold representing a lower likelihood than the maximum likelihood threshold; and
    determining whether the likelihood of the said operational event exceeds the marginal likelihood threshold, wherein the given set of components complies with the respective reliability condition for the said operational event if the likelihood of the operational event is less than the marginal likelihood threshold for the said operational event.

11. An aircraft component selection system according to claim 10, wherein obtaining the plurality of operational events includes:

    determining a set of component types for the aircraft system, each component type being associated with two or more of the candidate components for the aircraft system;
    generating an initial set of operational events each representing an altered operational mode of at least one of the component types;

determining a worst-case likelihood for each of the initial set of operational events based on the component altered operational probability values associated with the candidate components for the aircraft system; and modifying the initial set of operational events by removing operational events for which the associated worst-case likelihood is below a maximum likelihood threshold; and

outputting the modified set of operational events as the plurality of operational events.

12. An aircraft component selection system according to any one of claims 8 to 11, wherein the complexity evaluation module is configured to, iteratively:

obtain a set of independence rules representing dependencies between components in the aircraft system; store a complexity score representative of a number of independence rules having been removed from the set of independence rules;
evaluate a performance of the aircraft system when the given set of components is installed according to the set of independence rules;
if the performance of the aircraft system satisfies one or more performance criteria:

remove at least one independence rule from the set of independence rules; and
update the complexity score; and

if the performance of the aircraft system does not satisfy the one or more performance criteria, output the complexity score.

13. An aircraft component selection system according to any one of claims 8 to 12, wherein the at least one set of candidate components determined by the multi-objective optimisation module satisfy two or more conditions relating to at least one of the reliability score and the complexity score, wherein the two or more conditions include a target reliability score and a target complexity score; and optionally,

wherein the component library data includes an association between each component and at least one respective component characteristic, and
wherein the multi-objective optimisation module is configured to determine the at least one set of candidate components that satisfy two or more conditions relating to:

one or more target component characteristics; and
at least one of the reliability score and the complexity score; and

wherein the multi-objective optimisation module is further configured to:

determine a component characteristic score based on the component characteristics associated with the selected set of candidate components; and
evaluate the component characteristic score and at least one of the reliability score and the complexity score according to the two or more conditions.

14. A non-transitory computer-readable storage medium comprising computer-executable instructions which, when executed by at least one processor, cause the at least one process to perform a method according to any one of claims 1 to 7.

15. An aircraft comprising an aircraft system in which the components included in the aircraft have been selected from one or more stored sets of candidate components and associated indication of the outcome of the respective evaluation determined according to the computer-implemented method of any one of claims 1 to 7.

112

100

Processor

102

Storage

104

Reliability Evaluation Module

106

Complexity Evaluation Module

108

Multi-Objective Optimisation Module

110

Component Library Data

114

Model Data

*FIG. 1*

**202**

Providing a reliability evaluation function configured to produce a reliability score for a given set of candidate components for the aircraft system

**200**

**204**

Providing a complexity evaluation function configured to produce a complexity score representative of a complexity of installing a given set of candidate components for the aircraft system;

**208**

Selecting a new set of candidate components for the aircraft system

**210**

Performing at least one of the reliability evaluation function to generate a reliability score for the set of candidate components and the complexity evaluation function to generate a complexity score for the set of candidate components

**206**

Performing a multi-objective optimisation function to determine at least one set of candidate components for the aircraft system that satisfy one or more conditions relating to at least one of the reliability score and the complexity score

**212**

Evaluating at least one of the reliability score and the complexity score according to the one or more conditions

**214**

Storing the new set of candidate components in association with an indication of an outcome of the evaluation according to the one or more conditions

*FIG. 2*

110

| Component Type 1 | Component Type 2 | Component Type 3 |
|---|---|---|

316A
| $ID_1$ | $X_1, Y_1, Z_1$ |
|---|---|

316B
| $ID_2$ | $X_2, Y_2, Z_2$ |
|---|---|

316C
| $ID_3$ | $X_3, Y_3, Z_3$ |
|---|---|

316D
| $ID_4$ | $X_4, Y_4, Z_4$ |
|---|---|

316E
| $ID_5$ | $X_5, Y_5, Z_5$ |
|---|---|

316F
| $ID_6$ | $X_6, Y_6, Z_6$ |
|---|---|

316G
| $ID_7$ | $X_7, Y_7, Z_7$ |
|---|---|

316H
| $ID_8$ | $X_8, Y_8, Z_8$ |
|---|---|

316I
| $ID_9$ | $X_9, Y_9, Z_9$ |
|---|---|

<u>308</u>

208
Select New Set of Candidate Components

302
| $ID_1$ | $X_1, Y_1, Z_1$ |
|---|---|
| $ID_5$ | $X_5, Y_5, Z_5$ |
| $ID_7$ | $X_7, Y_7, Z_7$ |

304
Reliability Evaluation Function

Complexity Evaluation Function
306

310
SS

312
CS

212
Evaluate

314

302
| $ID_1$ | $X_1, Y_1, Z_1$ | Indication |
|---|---|---|
| $ID_5$ | $X_5, Y_5, Z_5$ | |
| $ID_7$ | $X_7, Y_7, Z_7$ | |

318

316
| $ID_n$ | $X_n, Y_n, Z_n$ | Indication |
|---|---|---|
| $ID_m$ | $X_m, Y_m, Z_m$ | |
| $ID_o$ | $X_7, Y_7, Z_7$ | |

*FIG. 3*

FIG. 4

FIG. 5

602 →

|  | 604 | 606 | 608 | 610 |
| --- | --- | --- | --- | --- |
|  | ID | Effected Operation | Number Altered Components | Reliability Condition |
|  | $S\_ID_1$ | $N_1, N_2, N_3$ | 3 | $SC_1$ |
|  | $S\_ID_2$ | $N_1, N_4, N_3$ | 3 | $SC_2$ |
|  | $S\_ID_3$ | $N_1, N_2, N_4$ | 3 | $SC_3$ |
|  | $S\_ID_4$ | $N_5, N_2, N_3$ | 3 | $SC_4$ |
|  | $S\_ID_5$ | $N_5, N_4, N_3$ | 3 | $SC_5$ |
|  | $S\_ID_6$ | $N_1, N_2$ | 2 | $SC_6$ |
|  | $S\_ID_7$ | $N_2, N_3$ | 2 | $SC_7$ |
|  | $S\_ID_8$ | $N_1$ | 1 | $SC_8$ |

612 →

| 614 | 616 | 618 | 620 | 622 | 624 |
| --- | --- | --- | --- | --- | --- |
| Comp_ID | Functional_ID | Weight | R-Cost | Non-R Cost | Altered Operation |
| $ID_1$ | $F\_ID_1$ | 3 | 600 | 400 | [EVENT : PROB] |
| $ID_2$ | $F\_ID_1$ | 5.4 | 939 | 440 | [EVENT : PROB] |
| $ID_3$ | $F\_ID_1$ | 2 | 1299 | 341 | [EVENT : PROB] |
| $ID_4$ | $F\_ID_2$ | 3.6 | 689 | 800 | [EVENT : PROB] |
| $ID_5$ | $F\_ID_2$ | 7 | 497 | 1110 | [EVENT : PROB] |
| $ID_6$ | $F\_ID_2$ | 8.17 | 539 | 716 | [EVENT : PROB] |
| $ID_7$ | $F\_ID_3$ | 5.55 | 1000 | 8080 | [EVENT : PROB] |
| $ID_8$ | $F\_ID_3$ | 5.23 | 1860 | 10000 | [EVENT : PROB] |

**FIG. 6**

FIG. 7

800

604

| | 802 | | 806 | 804 | | 808 |
| ID | Brake 1 input | Brake 2 input | Severity | Brake 1 Outcome | Brake 2 Outcome | Event Probabiltiy |
|---|---|---|---|---|---|---|
| $S\_ID_1$ | ALT | ALT | MIN | ALT | ALT | 2.96E-12 |
| $S\_ID_2$ | ALT | ALT | MIN | ALT | ALT | 1.467E-15 |
| $S\_ID_3$ | NORM | NORM | NORM | NORM | NORM | 3.135E-17 |
| $S\_ID_4$ | NORM | NORM | NORM | NORM | NORM | 1.504E-15 |
| $S\_ID_5$ | NORM | NORM | NORM | NORM | NORM | 1.608E-18 |
| $S\_ID_6$ | LOSS | LOSS | CRIT | LOSS | LOSS | 4.259E-16 |
| $S\_ID_7$ | NORM | NORM | NORM | NORM | NORM | 1.270E-17 |
| $S\_ID_8$ | NORM | NORM | NORM | NORM | NORM | 1.608E-17 |

*FIG. 8A*

810

| Category | Severity | MAX LIKELIHOOD THRESHOLD |
|---|---|---|
| $C_1$ | MIN | 1.675E-10 |
| $C_2$ | MIN | 3.464E-10 |
| $C_3$ | NORM | 7.435E-10 |
| $C_4$ | NORM | 9.233E-10 |
| $C_5$ | NORM | 5.839E-10 |
| $C_6$ | CRIT | 7.864E-11 |
| $C_7$ | CRIT | 7.384E-11 |
| $C_8$ | CRIT | 8.327E-11 |

*FIG. 8B*

FIG. 9

```
                        ┌─────────────────────┐
                        │     Processor       │┐
                        └─────────────────────┘└── 1002
                                   │
┌──────────────────────────────────┼────────────────────────────────────────┐
│      ⟋1004                        │                              1000       │
│     ⟋                             │                                          │
│  ┌──────────────────────────┐     │                                          │
│  │ Providing a reliability  │     │                                          │
│  │ evaluation function      │     │                                          │
│  │ configured to produce a  │     │                                          │
│  │ reliability score for a  │     │                  1010                    │
│  │ given set of candidate   │     │                 ⟋                        │
│  │ components for the       │     │                ⟋                         │
│  │ aircraft system          │     │  ┌────────────────────────────────────┐ │
│  └──────────────────────────┘     │  │  Selecting a new set of candidate  │ │
│        1006                       │  │  components for the aircraft system│ │
│       ⟋                           │  └────────────────────────────────────┘ │
│      ⟋                            │                  1012                    │
│  ┌──────────────────────────┐     │                 ⟋                        │
│  │ Providing a complexity   │     │                ⟋                         │
│  │ evaluation function      │     │  ┌────────────────────────────────────┐ │
│  │ configured to produce a  │     │  │ Performing at least one of the     │ │
│  │ complexity score         │     │  │ reliability evaluation function to │ │
│  │ representative of a      │     │  │ generate a reliability score for   │ │
│  │ complexity of installing │     │  │ the set of candidate components    │ │
│  │ a given set of candidate │     │  │ and the complexity evaluation      │ │
│  │ components for the       │     │  │ function to generate a complexity  │ │
│  │ aircraft system;         │     │  │ score for the set of candidate     │ │
│  └──────────────────────────┘     │  │ components                         │ │
│  ┌──────────────────────────┐     │  └────────────────────────────────────┘ │
│  │ Performing a multi-      │     │                  1014                    │
│  │ objective optimisation   │     │                 ⟋                        │
│  │ function to determine at │     │                ⟋                         │
│  │ least one set of         │     │  ┌────────────────────────────────────┐ │
│  │ candidate components for │     │  │ Evaluating at least one of the     │ │
│  │ the aircraft system that │     │  │ reliability score and the          │ │
│  │ satisfy one or more      │     │  │ complexity score according to the  │ │
│  │ conditions relating to   │     │  │ one or more conditions             │ │
│  │ at least one of the      │     │  └────────────────────────────────────┘ │
│  │ reliability score and    │     │                  1016                    │
│  │ the complexity score     │     │                 ⟋                        │
│  └──────────────────────────┘     │                ⟋                         │
│         ⟋                         │  ┌────────────────────────────────────┐ │
│        ⟋                          │  │ Storing the new set of candidate   │ │
│      1008                         │  │ components in association with an  │ │
│                                   │  │ indication of an outcome of the    │ │
│                                   │  │ evaluation according to the one or │ │
│                                   │  │ more conditions                    │ │
│                                   │  └────────────────────────────────────┘ │
└──────────────────────────────────────────────────────────────────────────────┘
```

*FIG. 10*

EP 4 311 784 A1

1100

FIG. 11

32

Europäisches
Patentamt

European
Patent Office

Office européen
des brevets

# EUROPEAN SEARCH REPORT

Application Number

EP 23 18 8245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/262442 A1 (WINGENTER RONALD [US]) 14 October 2010 (2010-10-14) * paragraph [0046] - paragraph [0057] * ----- | 1-15 | INV. B64F5/60 G06F30/15 G06Q10/06 |
| A | US 6 453 255 B1 (SMORODINSKY LEV [US] ET AL) 17 September 2002 (2002-09-17) * column 8, line 38 - column 13, line 58; figure 1 * ----- | 1-15 | |
| A | WO 02/23425 A1 (ABB AB [SE]; RAVEMARK DAG [SE] ET AL.) 21 March 2002 (2002-03-21) * page 11, line 29 - page 24, line 13 * ----- | 1-15 | |

TECHNICAL FIELDS
SEARCHED (IPC)

B64F
G06Q
G06F

The present search report has been drawn up for all claims

| Place of search | Date of completion of the search | Examiner |
|---|---|---|
| Munich | 18 December 2023 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 8245

This annex lists the patent family members relating to the patent documents cited in  the above-mentioned European search report.
The members are as contained in the European Patent Office EDP file on
The European Patent Office is in no way liable for these particulars which are merely given for the purpose of information.

18-12-2023

| Patent document cited in search report | | Publication date | Patent family member(s) | | Publication date |
|---|---|---|---|---|---|
| US 2010262442 | A1 | 14-10-2010 | NONE | | |
| US 6453255 | B1 | 17-09-2002 | NONE | | |
| WO 0223425 | A1 | 21-03-2002 | AU | 9246501 A | 26-03-2002 |
| | | | WO | 0223425 A1 | 21-03-2002 |

EPO FORM P0459

For more details about this annex : see Official Journal of the European Patent Office, No. 12/82